# EUROPEAN PATENT APPLICATION

(11) **EP 3 827 657 A1**
(43) Date of publication of application: **02.06.2021**
(21) Application number: 19211817.2
(22) Date of filing: 27.11.2019
(51) Int. Cl.: A01C 1/00, A01G 22/05, A01G 7/00

(54) **METHOD FOR PREVENTION AND/OR REDUCTION OF PATHOGEN BORNE INFECTIONS, IN PARTICULAR BY THE TOBRF VIRUS, AND FOR ADVANCING AND INCREASING FRUIT PRODUCTION IN CROP PLANTS**

(71) Applicant: van den Berg, Arie Nicolaas, 2671 CK Naaldwijk (NL)
(72) Inventor: van den Berg, Arie Nicolaas, 2671 CK Naaldwijk (NL)
(74) Representative: van Dam, Vincent

(57) **Abstract**

The present invention relates to a method of treatment of crop plants of the Solanaceae family capable of fruit bearing. The invention also relates to a crop plant capable of fruit bearing obtainable by said method. The invention also related to the use of a seedling of a crop plant of the Solanaceae family capable of fruit bearing of which a lower part of the root has been removed for producing a plant with advanced fruit production. The invention relates further to the use of a seedling of a crop plant of the Solanaceae family capable of fruit bearing of which a lower part of the root has been removed for producing a plant with increased resistance against a pathogen borne infection.

## Description

The present invention relates to a method of treatment of crop plants of the Solanaceae family capable of fruit bearing. The invention also relates to a crop plant capable of fruit bearing obtainable by said method. The invention also relates to the use of a seedling of a crop plant of the Solanaceae family capable of fruit bearing of which a lower part of the root has been removed for producing a plant with advanced fruit production. The invention relates further to the use of a seedling of a crop plant of the Solanaceae family capable of fruit bearing of which a lower part of the root has been removed for producing a plant with increased resistance against pathogen borne infections.

A major problem in the production of seedlings and grown plants of fruit producing crop plants is the risk of pathogen borne infections. Such infections are often caused during handling of seedlings especially when grafting. Grafting is common practice among crop plants of the Solanaceae family, which includes tomato (*Solanum lycopersicum*) and pepper plants (*Capsicum annuum*).

Grafting involves combining the upper part (scion) of a first plant with the root system (rootstock) of a second plant, such that the upper part of said first plant grows on the root system of said second plant. For instance a rootstock of a plant that has a high resistance against soilborne diseases can be grafted with a scion of a plant that has high fruit production but insufficient resistance to soil borne diseases. Other advantages of grafting include increased rate of growth and quality of fruit.

Tomato grafting is common practice for commercial crops in greenhouse and tunnel production. Tomato root-stocks are typically selected for their ability to resist infection by soil borne pathogens and/or ability to increase vigor and fruit yield of the plant. On the other hand, the tomato scion is typically selected for its fruit quality characteristics and leaves with resistance or tolerance for diseases.

Despite the use of soil borne disease resistant rootstock the process of grafting and the associated handling of the plants and/or plant parts during and after grafting involves a great risk of contamination of the grafted plants with diseases.

When grafting small plants there is a risk of transmitting pathogens that could originate from the parent plants of the scion and from the parent plants of the rootstock and also from the workers that handle the plants during grafting.

Further, the stress caused to a plant when being grafted, increases the risk of contamination. Namely, the grafted plant is under severe stress during grafting because light bruising of the plantlets by manually handling them and wounds inflicted by the tools used for cutting the plant parts used for grafting, are unavoidable. This makes the plant very vulnerable for infections during grafting.

After grafting the tops of seedlings must be fixed on the stems of the rootstock seedlings, for instance with a little clip, a small tube or a lead strip. This also causes bruises and damages to the plant material, and accordingly a risk of infections.

On the other hand, when fruit bearing plants are grown from seeds and seedlings without grafting, i.e. with their native root/scion combination, growers often consider that fruit yield is too low, especially when compared to grafted plants with scions derived from the same plant variety.

### Description of the invention

The inventor has now surprisingly found that the risk of pathogen borne infections, and in particular the very infectious ToBRF virus, can be prevented or reduced when after a period of growth, the lower part of the root of crop plants of the Solanaceae family is removed when transplanting the seedlings in a larger container. By using less than 50% of the number of plants that would be required when grafting and using certified ToBRF virus free seeds, in combination with minimal handling contact with the seedlings, the risk of infections such as ToBRF virus infection is reduced to a minimum. The inventor has also found that removing the lower part of the root of crop plants of the Solanaceae family leads to advanced fruit bearing compared to plants of which the roots were not partially removed. Furthermore, the inventor has found that removing the lower part of the root of crop plants of the Solanaceae family leads to increased fruit yield compared to plants of which the roots were not partially removed. In addition, while grafting requires two seedlings in order to obtain one fruit producing plant, the present invention requires only one plant, which saves more than 50% plant material, greenhouse space, fuel, labor and consequently costs when raising the ungrafted plants.

Therefore the invention relates in a first aspect to a method of treatment of crop plants of the Solanaceae family capable of fruit bearing, comprising the steps of: i) growing seedlings of said plant for a first period; followed by ii) removing a lower part of the root of said seedlings; iii) replanting the seedlings obtained in step ii). After replanting the seedlings can be grown in a step iv) to fruit bearing plants, optionally after additional replanting. The inventor has observed that plants obtained by this method have:
A) A greatly reduced risk of contamination with pathogens and in particular ToBRF virus.
B) Increased fruit yield at least in an initial phase of fruit production.
C) Advanced fruit bearing.
D) Increased resistance and tolerance towards pathogen borne diseases.

In view of this, the method of the invention aims in particular at increasing fruit yield in crop plants of the Solanaceae family capable of fruit bearing, advancing fruit bearing in said crop plants, or preventing or reducing pathogen borne infections in said crop plants, or any combination thereof.

Because the method of the invention leads to fruit bearing crop plants having these advantageous characteristics compared to a crop plant of the same species and variety grown under the same circumstances, except that the lower part of its roots has not been removed, the invention relates in a second aspect to a crop plant of the Solanaceae family capable of bearing fruit, obtainable by the method of the first aspect of the invention.

In view of the above, the invention relates in a third aspect to the use of a seedling of crop plant of the Solanaceae family capable of fruit bearing of which a lower part of the root has been removed for producing a plant with advanced fruit production. Accordingly the plant has extra fruit yield in the initial phase of fruit production, in general during the first 2 weeks of fruit production. In combination with the fact that the end of the growth season is the same for both plant treated in accordance with the invention and plants not treated in accordance with the invention, this may result in higher overall fruit yield of the plants treated according to the invention.

Also in view of the above, the invention relates in a fourth aspect to the use of a seedling of a crop plant of the Solanaceae family capable of fruit bearing of which a lower part of the root has been removed for producing a plant with increased resistance against a pathogen borne infection.

In a preferred embodiment the invention relates to the use of a seedling of a crop plant of the Solanaceae family capable of fruit bearing of which a lower part of the root has been removed for producing a plant with increased resistance against a pathogen borne infection and advanced fruit production.

Said pathogen borne infection may belong to the groups of bacterial, fungal, viral or parasitic infections.

Such infections include, but are not limited to infections caused by one or more from the group selected from Tobacco mosaic virus (TMV), Verticillium, Fusarium, Corky root rot, nematodes, Botrytis, Pythium, and Tomato Brown Rugose Fruit (ToBRF)-virus, in particular wherein said pathogen borne infection is caused by the Tomato Brown Rugose Fruit (ToBRF)-virus.

To ensure that pathogens are not present at the onset of growing a plant, the seeds used to grow seedlings for purposes of the invention preferably are certified pathogen free seeds, such as certified ToBRF virus free seeds, for instance of a ZAROTEN F1 tomato hybrid, as discussed below.

For the same reason it is preferred that seeds are not sown before the second year after their harvest.

The crop plant in the context of the invention may be any crop plant of the Solanaceae family capable of bearing fruit. This includes plants from Solanoideae subfamily. Within this subfamily this may be a plant from the the Solanum genus, such as tomatoes. The invention is in particular applicable to tomatoes (*Solanum lycopersicum*). In this respect, in one preferred embodiment said crop plant is a tomato plant.

Said tomato plant preferably is a hybrid tomato plant. Hybrid tomato plants combine two different tomato plant varieties to produce a cultivated variety with beneficial traits derived from both parents. One of the important advantages of hybrid tomatoes compared to standard tomato plants is that hybrid plants are more vigorous with improved disease resistance. Hybrid tomato cultivars are available with determinate and with indeterminate growth habits. Determinate cultivars are grown to produce a bushy plant bearing fruit during four to eight weeks. Indeterminate cultivars produce climbing vines that continue to produce fruit until the vine dies due to low temperatures and lack of light at the end of the season.

Particularly suitable for the invention are hybrid tomatoes marketed under the trademark "LONGLIFE". These tomato hybrids, such as ZAROTEN F1 produce - contrary to most other tomato sorts - plants that are more generative instead of vegetative in their development. That means fewer leaves and more tomatoes. In other words: the plants are more inclined to produce fruit than to produce leaves. Most other commercial tomato varieties are more vegetative and develop too many leaves during the season, which must be trimmed and broken away, almost weekly, to allow the fruit to develop. Apart from labor cost, this trimming of the leaves causes wounds and bruising of the plants, a great risk of infections. Among these hybrid tomatoes, a particularly suitable cultivar is the tomato cultivar ZAROTEN F1. This is one of the indetermined cultivars that benefit extra from favorable root conditions because of their generative growing habit. Leaves of these cultivars only need to be trimmed when they are a nuisance or touching the ground. This results in a great additional saving of labor and reduction of diseases, such as leaf mould, Botrytis and of course the ToBRF virus. It is furthermore particularly advantageous that ZAROTEN F1 Hybrid tomatoes are highly resistant to root problems, including problems caused by fusarium, verticillium, nematodes and corky rootrot. This enhances the abovementioned advantageous effects of the present invention because many commercial tomato hybrids lack natural resistance to nematodes and some other soil borne diseases.

As an illustration of the advantageous effects of the present invention, reference is made to the following: commercial producers of tomatoes have to pay about 2,50 Euro, more or less depending on the time of the year, for their grafted tomato plants raised from tomato seeds by highly specialized plant raisers. With an average of three plants per m², the cost to the tomato grower could be as much as 75.000 Euro per HA., before even starting his 1 year crop. For 1000 grafted tomato plants one needs 1250 F1 hybrid tomato seeds plus 1250 F1 hybrid rootstock seeds, 2500 seeds in total. Each hybrid tomato seed has a male and a female parent, that means 1000 grafted tomato plants are genetically linked with 2500 hybrid seeds, each with male and female parent plants. Each grafted hybrid tomato plant is directly linked with 4 different parent lines and 2500 seeds. Each parent line could have a different origin: e.g. from The Netherlands, from Chili, from Israel or from Taiwan. More different parent lines increase the possibility of contamination. However, when 1000 tomato plants are being produced following the invention, only 1200 F1 hybrid tomato seeds will be required (taking a loss of 15-20% into account), involving only 2 parent lines. Reducing the number of required plants with more than 50% is already an important reduction of the risk of contamination with harmful pathogens. In addition, avoiding all the handling, cutting and bruising of the seedlings that would be required for grafting makes the plants less vulnerable for infections, such as infections caused by the ToBRF virus.

Also within the Solanoideae subfamily the crop plant in the context of the invention may be a plant from the Capsiceae family, including bell peppers and related plants. The invention is in particular applicable to peppers (Capsicum), including *C. annuum, C. baccatum, C. chinense, C. frutescens,* and *C. pubescens.* In this respect, in another preferred embodiment, said crop plant is a pepper plant, in particular a bell pepper plant (*Capsicum annuum*).

In this application the term "crop plant" is meant to encompass any stage of the plant such as seedling, plant-let, or a plant that bears fruit, unless the stage of the plant has been specified in the context of a specific embodiment of the invention. Plants produced in accordance with the invention may be used to produce fruit without the necessity of grafting. Nevertheless, the seedlings and plantlets produced in accordance with the invention may also well serve to prepare rootstock from them for purposes of grafting.

The above-mentioned infections, Tobacco mosaic virus (TMV), Verticillium, Fusarium, Corky root rot, nematodes, Botrytis, Pythium and the more recent very infectious Tomato Brown Rugose Fruit (ToBRF)-virus are common in the field of tomatoes and bell peppers and therefore the invention provides the best thinkable strategy to prevent and reduce these infections in tomato and bell pepper.

To obtain the abovementioned advantageous effects it will be sufficient to remove a lower part of the roots once, after which the crop plant is allowed to grow to a fruit bearing plant, i.e. a plant that contains a number of fruits. However it is also possible to subject the seedlings to a second treatment of removing a lower part of the roots.

The method of the invention may therefore suitably comprise between steps iii) and iv) the steps of: i-2) growing said seedlings obtained in step iii) for a second period; followed by ii-2) removing a lower part of the root of said seedlings; iii-2) replanting the seedlings obtained in step ii-2). A second round of removal of the lower part of the roots results in a further advance of fruit production, and thus overall fruit yield in during the growth season.

When removing the lower part of roots of seedlings in accordance with the invention, care must be taken to touch and contact the seedlings as little as possible and to make the cut in the roots as clean as possible. Removing the lower part of the roots is therefore suitably performed by cutting with clean and sharp blades or knifes. For this purpose blades and knifes are suitably disinfected constantly with skimmed milk.

In general, handling the seedlings involves disinfecting hands and tools with skimmed milk often during the working hours to lower the risk of contamination as much as possible. This includes canteens and washrooms. The number of visitors is preferably kept at a minimum.

It is preferred that contact of the seedlings with workers or machinery is kept at a minimum in order to avoid the risk of transfer of pathogens and to keep bruising and damaging of the seedlings as low as possible. It is therefore preferred that seedlings are initially produced by sowing seeds in seedling trays with multiple cells. In each cell of such a tray a seed is initially allowed to germinate and grow for a period of time until the seedlings are transplanted to larger pots or seedling trays with larger cells. In order to keep contact of the seedlings with workers or machinery at a minimum, the lower part of the roots of the seedlings in the trays may then be removed by cutting off the lower part of the tray, for instance with a blade, in order to remove the lower parts of seedlings in the tray all at once. This is also very effective in view of work. In this respect it is preferred that during said first and/or second period of growth, said seedlings are grown in trays, which trays contain multiple seedlings, and wherein said lower part of the root of said seedlings is removed by cutting away a lower part of said trays, for instance half or less of the part filled with growth substrate, such as between 40 and 50% of this part.

When removing a lower part of the root, care should be taken not to remove a too large portion of the root, because this would lead to longer recovery periods of the seedling. It is therefore preferred that removing said lower part of the seedlings comprises removal of the lower half of the root or less, for instance between 40 and 50% of the root volume. The exact portion to be removed depends on judgement but in order to obtain uniform plants, every plant should undergo the same treatment.

After removing the lower part of the roots the remaining root portion is suitably planted straight down in the pot when replanting, because curled-up roots may spoil the seedlings.

The duration of the first period of growth of the seedlings, and in case of a second round of removal of the lower part of the roots also the second period of growth, depends on the crop plant species and variety and on the growing conditions. It is recommended to remove the lower part of the roots as early as possible because the development of a small seedling is less inhibited by transplanting than that of a larger seedling. Preferably, the lower part of the roots is removed when the seedling has 3 or 4 true leaves.

Preferably said the first period of growth is less than 5 weeks, such as between 10 days and 4 weeks, after which the lower part of the root can be removed for the first time. After transplanting and if the lower part of the root is removed for a second time, said second period is preferably 3 weeks or less, such as between 10 and 15 days. The criterion here is that the seedling has commenced growing again after the transplanting. In general around 12 days after the first removal of the lower part of the root the seedling has commenced growing again. These periods apply very well to tomato seedlings. Optimal periods for bell pepper seedlings will be a little longer compared to tomato (in the order of a few days).

### Examples

### Example 1 - tomato plants

**Grafted tomato** plants were produced from 1250 tomato seeds to provide tops (scions) and 1250 seeds of a tomato rootstock. These seeds were sown simultaneously for the production of 1000 grafted plants. To be grafted, of all the 2500 seeds sown, the tops of the seedlings were cut off about 3 to 4 weeks after sowing and about 3 cm above ground level. Then the tops of the seedlings were fixed on the stems of the rootstock seedlings. After 3 weeks the plants were placed in larger pots and eventually grown to produce tomato fruit.

**Plants according to the invention** were produced by sowing 1200 seeds ZAROTEN F1 to produce 1000 plants. After three weeks of growth the lower 50% portion of the roots was removed by means of a sharp blade. The seedlings produced this way were placed in larger pots and eventually grown to produce tomato fruit.

### Results:

1. Plants according to the invention started producing fruit 10 days earlier than the grafted plants.
2. Plants according to the invention started producing fruit earlier and produced 0,5 kg/m² more tomatoes during the first few weeks compared to the grafted plants.
3. Overall yield of plants according to the invention is at least comparable to that of grafted plants.
4. Plants according to the invention allowed a cost reduction of 2 Euro per m² in view of reduced use of seeds, plant material, nursey space, fuel, labor and handling costs.
5. No infections were observed in the plants grown according to the invention.

### Example 2 - bell pepper plants

Bell pepper plants can be produced in accordance with the procedure described in example 1, resulting in:
1. Bell pepper plants according to the invention start producing fruit 12 days earlier than the grafted plants.
2. A substantial cost reduction per bell pepper plant in view of reduced use of seeds and plant material, nursery space, fuel, labor and handling costs.
3. Overall yield of plants according to the invention comparable to that of grafted plants.
4. No infections were observed in the plants grown according to the invention.

## Claims

1. Method of treatment of crop plants of the Solanaceae family capable of fruit bearing, comprising the steps of:
i) growing seedlings of said plant for a first period; followed by
ii) removing a lower part of the root of said seedlings;
iii) replanting the seedlings obtained in step ii);
iv) growing the seedlings to fruit bearing plants.

2. Method according to claim 1, comprising between steps iii) and iv) the steps of:
i-2) growing said seedlings obtained in step iii) for a second period; followed by
ii-2) removing a lower part of the root of said seedlings;
iii-2) replanting the seedlings obtained in step ii-2).

3. Method according to any of the previous claims, wherein during said first and/or second period said seedlings are grown in trays containing multiple seedlings and wherein said lower part of the root of said seedlings is removed by cutting away a lower part of said tray.

4. Method according to any of the previous claims, wherein removing said lower part of the seedlings comprises removal of half of the root or less.

5. Method according to any of the previous claims, wherein said first period is 5 weeks or less; and/or wherein said second period is 3 weeks or less.

6. Method according to any of the previous claims, lower part of the roots is removed when the seedling contains true leaves, for instance between 1 and 4 true leaves.

7. Method according to any of the previous claims, wherein said crop plant is a tomato plant.

8. Method according to any of the claims 1 to 6, wherein said crop plant is a pepper plant, in particular a bell pepper plant.

9. Crop plant of the Solanaceae family capable of bearing fruit, obtainable by the method according to any of the previous claims.

10. Use of a seedling of a crop plant of the Solanaceae family capable of fruit bearing of which a lower part of the root has been removed for producing a plant with advanced fruit production.

11. Use of a seedling of a crop plant of the Solanaceae family capable of fruit bearing of which a lower part of the root has been removed for producing a plant with increased resistance against a pathogen borne infection.

12. Use according to claim 11, wherein said pathogen borne infection derives from bacterial, fungal, viral or parasitic infections, in particular infections caused by one or more of the group selected from Tobacco mosaic virus (TMV), Verticillium, Fusarium, Corky root rot, nematodes, Botrytis, Pythium, and Tomato Brown Rugose Fruit (ToBRF)-virus, in particular wherein said pathogen borne infection is caused by Tomato Brown Rugose Fruit (ToBRF)-virus.

13. Use according to any of the claims 10 to 12, wherein said lower part comprises half of the root or less.

14. Use according to any of the claims 10 to 13, wherein said crop plant is a tomato plant

15. Use according to any of the claims 10 to 13, wherein said crop plant is a pepper plant, in particular a bell pepper plant.
